(19) Europäisches Patentamt
European Patent Office
Office européen des brevets

(11) Veröffentlichungsnummer: 0 008 611
A1

(12) EUROPÄISCHE PATENTANMELDUNG

(21) Anmeldenummer: 79101875.7

(51) Int. Cl.³: C 01 B 7/07

(22) Anmeldetag: 11.06.79

(30) Priorität: 04.08.78 DE 2834252

(43) Veröffentlichungstag der Anmeldung: 19.03.80 Patentblatt 80/6

(84) Benannte Vertragsstaaten: BE FR GB IT NL

(71) Anmelder: CHEMISCHE WERKE HÜLS AG
- RSP Patente / PB 15 - Postfach 13 20
D-4370 Marl 1(DE)

(72) Erfinder: Coenen, Alfred, Dr.
Guido-Heiland-Strasse 3
D-4370 Marl(DE)

(72) Erfinder: Kosswig, Kurt, Dr.
Hoechster Strasse 10
D-4370 Marl(DE)

(72) Erfinder: von Praun, Ferdinand, Dr.
Am Schmöningsberg 8
D-4358 Haltern(DE)

# (54) Verfahren zur Gewinnung von gasförmigem Chlorwasserstoff aus verdünnter wässriger Salzsäure.

(57) Verfahren zur Gewinnung von gasförmigem Chlorwasserstoff aus wäßriger Salzsäure durch Extraktion mit tertiären Alkylaminen, deren Säurekonstante $K_a$ kleiner als $10^{-3}$ ist und die 14 bis 36 C-Atome in den stickstoffgebundenen Seitenketten enthalten, davon mindestens einen 6 C-Atome enthaltenden aliphatischen Rest und höchstens eine Methylgruppe, Versetzen des Extraktes mit einem mit Wasser nicht mischbaren und mindestens bei 120°C siedenden Lösemittel, Destillation des Extraktes zur Abtrennung des Wassers unter Rückführung der organischen Phase in den Destillationsprozeß, anschließendes Abziehen des gasförmigem Chlorwasserstoffs und Rückführung des das Amin und gegebenenfalls Verunreinigungen enthaltende Lösemittels in den Extraktionsprozeß, wobei man es vorher ganz oder teilweise über ein Adsorptionsmittel leitet.

EP 0 008 611 A1

Verfahren zur Gewinnung von gasförmigem Chlorwasserstoff aus verdünnter wäßriger Salzsäure

Bei vielen technischen Prozessen fällt Chlorwasserstoff als Nebenprodukt in Form verdünnter wäßriger Salzsäuren an, für die es nur einen begrenzten technischen Anwendungsbereich gibt. Um den in Form einer solchen verdünnten wäßrigen Salzsäure vorliegenden Chlorwasserstoff als Chemierohstoff, beispielsweise für die Herstellung von Vinylchlorid, Ethylchlorid, Chloropren oder Chlorsulfonsäure nutzen zu können, muß er als wasserfreies Gas isoliert werden.

Die hierzu erforderliche destillative Aufarbeitung verdünnter Säuren scheidet aus wirtschaftlichen Gründen aus, weil zu große Energiemengen zur Verdampfung des Wassers aufgebracht werden müßten. Eine extraktive Isolierung des HCl-Gases scheiterte bisher an den ungünstigen Verteilungskoeffizienten zwischen HCl und Extraktionsmitteln, wie z. B. Pentanolen. Als Extraktionsmittel mit weitaus günstigeren Verteilungskoeffizienten bieten sich längerkettige Amine an, die sowohl selbst als auch in Form ihrer Hydrochloride wasserunlöslich sein müssen. Mit ihrer Hilfe ist es möglich, den Chlorwasserstoff nahezu vollständig aus einer verdünnten Salzsäure abzutrennen.

Die anschließende thermische Spaltung der so gewonnenen Aminhydrochloride und die Isolierung des wasserfreien

Chlorwasserstoffs können sodann nach den in der DE-OS 26 33 640 und der deutschen Patentanmeldung P 28 05 933.8 beschriebenen Verfahren erfolgen.

Das Verfahren der DE-OS 26 33 640 ist dadurch gekennzeichnet, daß man

a) die wäßrige Salzsäure mit einem Amin oder einem Gemisch aus einem Amin und einem inerten, mit Wasser nicht mischbaren, niedriger als das verwendete Amin siedenden Lösungsmittel extrahiert, wobei als Amin verwendet werden tertiäre Alkylamine, tertiäre Aryldialkylamine, sekundäre Arylalkylamine, primäre Alkylarylamine oder Mischungen davon, die 14 bis 36 Kohlenstoffatome in den stickstoffgebundenen Seitenketten enthalten, davon höchstens eine stickstoffgebundene Methylgruppe und mindestens einen mindestens 6 Kohlenstoffatome enthaltenden aliphatischen Rest, und bei denen die Säurekonstante $K_a$ des Amins kleiner als $10^{-3}$ ist,

b) dem Extrakt ein inertes, mit Wasser nicht mischbares, niedriger als das verwendete Amin siedendes Lösungsmittel zugibt, sofern das Lösungsmittel nicht schon in Stufe a) zugegeben wurde,

c) den Extrakt destilliert, die entstehenden Dämpfe kondensiert, aus dem zweiphasigen Kondensat kontinuierlich das Wasser abtrennt und die organische Phase in den Destillationsprozeß zurückgibt und

d) nach Entfernen des Wassers den Extrakt bei Sumpftemperaturen zwischen 100 und 250 °C am Rückfluß destilliert und den am Kopf der Kolonne freiwerdenden gasförmigen Chlorwasserstoff abzieht.

Nach dem nicht zum Stand der Technik gehörenden Verfahren der deutschen Patentanmeldung P 28 05 933.8 wird in Abwandlung des Verfahrens der DE-OS 26 33 640 der gasförmige Chlorwasserstoff dadurch gewonnen, daß man das Gemisch aus Aminhydrochlorid und Lösemittel auf eine Temperatur unterhalb des Siedepunktes des Lösemittels erhitzt und den freiwerdenden Chlorwasserstoff unter Durchleiten eines

inerten Gasstromes abtrennt.

Die beiden genannten Verfahren gestatten zwar erstmalig die Gewinnung von gasförmigem Chlorwasserstoff aus verdünnter wäßriger Salzsäure mit Hilfe spezieller Amine und durch anschließende Thermolyse der gebildeten Aminhydrochloride, sie sind jedoch immer noch mit Mängeln behaftet. So besteht der Hauptmangel darin, daß sich das tertiäre aliphatische Amin abhängig von der Struktur und der Höhe der thermischen Belastung in mehr oder weniger kurzer Zeit u. a. unter Bildung primärer und sekundärer aliphatischer Amine und Alkylchloride zersetzt und der Wirkungsgrad der Spaltung dadurch in zunehmendem Maße sinkt, da primäre und sekundäre aliphatische Amine zwar gut Chlorwasserstoff aus verdünnter Salzsäure extrahieren, ihre Hydrochloride sich jedoch thermisch kaum spalten lassen. Es kommt somit zu einer zunächst unmerklichen, mit fortschreitender Zersetzung jedoch immer stärker ansteigenden Bildung der störenden Nebenprodukte.

Ein Verfahren zur Gewinnung von (billigem) Chlorwasserstoff durch Extraktion von verdünnter Salzsäure mit Aminen kann aber nur dann wirtschaftlich arbeiten, wenn das vergleichsweise teure Amin möglichst verlustfrei im Kreise gefahren werden kann.

Aufgabe der vorliegenden Erfindung war es daher, ein Verfahren zur Gewinnung von gasförmigem Chlorwasserstoff durch Extraktion von verdünnter wäßriger Salzsäure mit tertiären aliphatischen Aminen und anschließende Spaltung des Aminhydrochlorids zu finden, bei dem die Bildung der unerwünschten Zersetzungsprodukte entweder verhindert oder doch weitgehend zurückgedrängt wird.

Diese Aufgabe wurde durch das in den Ansprüchen beschriebene Verfahren gelöst, d. h. dadurch, daß man in der Stufe a) tertiäre Amine mit hohem Reinheitsgrad einsetzt und der Akkumulation von Beimengungen und Zersetzungsprodukten

vorbeugt, indem man den Kreisstrom von Amin und Lösemittel teilweise oder ganz über geeignete Adsorptionsmittel leitet, die die Zersetzungsprodukte, insbesondere sekundäre und primäre Amine, selektiv aus dem Gemisch zurückhalten. Die für das erfindungsgemäße Verfahren geeigneten Amine sind tertiäre Alkylamine, die 14 bis 36 Kohlenstoffatome in den stickstoffgebundenen Seitenketten besitzen. Eine dieser Seitenketten muß mindestens 6 Kohlenstoffatome enthalten, also ein Cyclohexyl-, Hexyl- oder Isohexylrest sein, und die Aminogruppe darf höchstens eine Methylgruppe tragen.

Die Dissoziationskonstante $K_a$ der Gleichgewichtsreaktion

$$NR_3H^+ + H_2O \rightleftharpoons NR_3 + H_3O^+$$

muß, um eine ausreichende Extraktion des Chlorwasserstoffs sicherzustellen, kleiner als $10^{-3}$ sein. Die Dissoziationskonstante $K_a$ ist für viele Amine der einschlägigen Literatur, z. B. Handbook of Chemistry and Physics, 51. Ed. (1970-71), Seite D 117 ff., zu entnehmen.

Geeignete Amine sind z. B. Trihexylamin, Tricyclohexylamin, Triheptylamin, Trioctylamin, Cyclohexyl-diisooctylamin, Cyclohexyl-4-heptyl-octylamin, Cyclohexyl-2-ethylhexyl-octylamin, 2-Ethylhexyl-4-heptyl-octylamin, Tri-2-ethylhexylamin, Di-2-ethylhexylmethylamin, Didecylethylamin, Tridodecylamin, Didodecyl-methylamin, Dodecyl-diisopropylamin, Dodecyl-dibutylamin, Dodecyl-diisobutylamin, Dodecyl-isobutyl-methylamin, Diisopentadecyl-methylamin, Diisopentadecyl-ethylamin und Diisopentadecyl-isopropylamin.

Als Lösemittel für die Amine verwendet man organische Flüssigkeiten, die unter den Bedingungen des Verfahrens gegen Wasser, Chlorwasserstoff, Amine und Temperaturbelastung inert sind und die darüberhinaus nicht als Elutionsmittel für die Verunreinigungen wirksam sind. Besonders geeignet sind für das Verfahren möglichst unpolare

Verbindungen, wie aromatische und aliphatische Kohlenwasserstoffe, z. B. Xylole, Cumol, Cymole, Ethylbenzol, Trimethylbenzole, 1.2.4-Triethylbenzol, 1.3.5-Triethylbenzol, 1.2.3.4-Tetramethylbenzol, 1.2.3.5-Tetramethylbenzol, 3-Phenylpentan, Dodecylbenzol, Nonan, Decan, Undecan, Dodecan, Tetradecan, Decalin, Tetralin.

Die zweckmäßige Konzentration des tertiären Amins in der Lösung richtet sich nach der Art des Amins und der Menge der abzutrennenden Verunreinigungen. Im allgemeinen arbeitet man mit einem Amin-Lösemittel-Verhältnis von 1 : 1 bis 1 : 10.

Für das erfindungsgemäße Verfahren geeignete Adsorptionsmittel sind Aluminiumoxide großer spezifischer Oberfläche (100 bis 400 $m^2/g$) in körniger, tablettierter oder gebrochener Form. Es hat sich gezeigt, daß die Basizität des Aluminiumoxids nicht entscheidend ist, es kann oberflächlich basisches, neutrales oder saures Aluminiumoxid eingesetzt werden. Wichtig dagegen ist die Aktivstufe. Brauchbar sind die Aktivstufen 1 bis 3, vorzugsweise die Aktivstufen 1 und 2. Als chromatographisches Adsorptionsmittel verwendetes Aluminiumoxid wird nach der Brockmann-Skala in 5 Aktivitätsstufen eingeteilt. Die nach Brockmann standartisierten Aluminiumoxide unterscheiden sich durch ihren Wassergehalt (in Gewichtsprozent): 1 (0 %), 2 (3 %), 3 (4,5 %), 4 (9,5 %), 5 (15 %) (O. A. Neumüller, Römpps Chemie-Lexikon, Seite 427 (1972); weitere Literatur dort).

Weitere geeignete Adsorptionsmittel sind Kieselgele mit spezifischen Oberflächen von 500 bis 700 $m^2/g$, silanisierte Kieselgele (300 bis 400 $m^2/g$) sowie Molekularsiebe vom Calciumzeolithtyp (500 bis 600 $m^2/g$). In den Kieselgelen liegt die Kieselsäure in Form hochkondensierter Polykieselsäuren mit oberflächenreicher Blattstruktur vor. Kieselgele, deren hydrophile Oberflächen durch Umsetzung mit Chlorsilanen hydrophobiert wurden, werden als silanisierte Kieselgele bezeichnet.

Die spezifische Oberfläche wird nach BET (S. Brunauer, P. H. Emmett, E. Teller, J. Am. Chem. Soc. 60, 309 (1938)) bestimmt.

Im allgemeinen führt man das erfindungsgemäße Verfahren bei Raumtemperatur (15 bis 30 °C) durch, jedoch kann es auch zweckmäßig sein, bei höheren Temperaturen zu arbeiten.
Das Adsorptionsmittel läßt sich ohne Schwierigkeiten mit Hilfe polarer Lösemittel regenerieren.
Der Reinheitsgrad des gereinigten tertiären Amins sollte möglichst über 99 %, vorzugsweise über 99,5 % und besonders bevorzugt über 99,9 % liegen.

Ein wesentlicher Vorteil des erfindungsgemäßen Verfahrens besteht außer in der Vermeidung von Aminverlusten noch darin, daß mit weniger stabilen Aminen die praktische Durchführung der HCl-Extraktion und Hydrochloridspaltung überhaupt erst möglich wird, wie am Beispiel des Systems Trioctylamin-Dodecan gefunden wurde. In anderen Fällen ergibt sich ein erheblich größerer Temperaturspielraum, nämlich von 100 bis 300 °C, in dem die Spaltung wirtschaftlich betrieben werden kann.

Selbstverständlich können auch entsprechende Extrakte, die auf andere Weise als durch Extraktion wäßriger Salzsäure erhalten wurden, nach dem erfindungsgemäßen Verfahren in Chlorwasserstoff und Amin zerlegt werden.

Das erfindungsgemäße Verfahren wird durch die nachfolgenden Beispiele und Vergleichsbeispiele erläutert.
Alle Prozentangaben sind - sofern nicht anders angegeben - Gewichtsprozente.
In den Vergleichsbeispielen A bis D soll in vergleichenden Versuchen gezeigt werden, daß bei Zusatz von sekundärem Aminhydrochlorid zum tertiären Aminhydrochlorid bei der Thermolyse eine autokatalytische Zersetzung des tertiären Amins zu beobachten ist.

Vergleichsbeispiel A

In einem 500 ml Dreihalskolben, ausgerüstet mit Gaseinleitungsrohr, Thermometer und Wasserabscheider mit aufgesetztem Rückflußkühler, wurden 77,9 g (0,2 Mol) Tri-(2-ethylhexyl)-aminhydrochlorid in der gleichen Gewichtsmenge Xylol gelöst. Durch Eintauchen des Kolbens in ein auf 220 °C vorgeheiztes Ölbad wurde der Kolbeninhalt schnell zum Sieden gebracht, wobei ein gleichmäßiger Stickstoffstrom von 30 l/h eingegast wurde. Der sich abspaltende Chlorwasserstoff wurde in zwei hintereinandergeschalteten mit Natronlauge beschickten Vorlagen aufgefangen und titrimetrisch bestimmt. Im Verlaufe von 6 Stunden spalteten sich 97,3 % der theoretisch möglichen Menge an Chlorwasserstoff aus dem Hydrochlorid ab. Das Sumpfprodukt wurde nach Behandlung mit Natronlauge gaschromatographisch auf seine Zusammensetzung untersucht. Es wurden <0,1 % sek. Amin als Zersetzungsprodukt gefunden.

Vergleichsbeispiel B

77,9 g (0,2 Mol) Tri-(2-ethylhexyl)-aminhydrochlorid wurden in einer Apparatur gemäß Vergleichsbeispiel A nach Zusatz von 7,8 g (0,028 Mol) Di-(2-ethylhexyl)-aminhydrochlorid in 78 g Xylol der Thermolyse unterworfen. Im Verlaufe von 6 Stunden spalteten sich 92,7 % der theoretisch möglichen Menge an Chlorwasserstoff ab. Das Sumpfprodukt enthielt nach Behandlung mit Natronlauge, lösemittelfrei gerechnet, 84,9 % Tri-(2-ethylhexyl)-amin und 14,1 % Di-(2-ethylhexyl)-amin. Da das Einsatzprodukt 8,8 % sek. Amin enthielt, hat sich folglich während der Hydrochloridspaltung 5,3 % Zersetzungsprodukt zusätzlich gebildet.

Vergleichsbeispiel C

In einer Apparatur gemäß Vergleichsbeispiel A wurde eine Lösung von 60 g (0,2 Mol) Tricyclohexylaminhydrochlorid in 275 g tert.-Butyl-m-xylol mit Hilfe eines auf 280 °C vorgeheizten Ölbades schnell zum Sieden gebracht, wobei ein gleichmäßiger Stickstoffstrom von 30 l/h eingegast wurde. Im Verlaufe von 6 Stunden spalteten sich 93,7 % der theoretisch möglichen Menge an Chlorwasserstoff aus dem Hydrochlorid ab. Im Sumpfprodukt fand sich nach Behandlung mit Natronlauge <0,1 % sek. Amin als Zersetzungsprodukt.

Vergleichsbeispiel D

60 g (0,2 Mol) Tricyclohexylaminhydrochlorid wurden in einer Apparatur gemäß Vergleichsbeispiel A nach Zusatz von 6 g (0,028 Mol) Dicyclohexylaminhydrochlorid in 275 g tert.-Butyl-m-xylol der Thermolyse unterworfen. Im Verlaufe von 6 Stunden wurden 98,6 % der theoretisch möglichen Menge an Chlorwasserstoff freigesetzt. Das Sumpfprodukt bestand nach Behandlung mit Natronlauge zu 89,3 % aus Tricyclohexylamin und zu 10,7 % aus Dicyclohexylamin (lösemittelfrei gerechnet). Da das Einsatzprodukt 8,7 % sek. Amin enthielt, hat sich folglich während der Hydrochloridspaltung 2,0 % Zersetzungsprodukt zusätzlich gebildet.

Beispiel 1

Der Versuch wurde in einer kontinuierlich betriebenen Anlage zur Extraktion von Salzsäure mit Aminen und Spaltung der gebildeten Aminhydrochloride durchgeführt.
Der Extraktionsteil besteht aus einer 2,5 m hohen mit Glaskugeln (4 mm) gefüllten Säule (Ø 30 mm), in der einer von oben nach unten fließenden Salzsäure ein Gemisch aus Lösemittel und Amin entgegenströmt. Am Kopf der Extraktionssäule wird der hydrochloridhaltige Extrakt abgenommen und auf die Spaltkolonne (Höhe: 2 500 mm, Ø 40 mm) gegeben. Das mit dem Extrakt eingeschleppte Wasser wird am Kopf der Kolonne mit Hilfe eines aufgesetzten Wasserauskreisers in Form von konz. Salzsäure entfernt, wobei das Lösemittel als Schleppmittel für das Wasser dient. (Die Entfernung des Wassers ohne HCl-Verlust kann auch in einer vorgeschalteten Destillationsstufe erfolgen.) Der bei der

Hydrochloridspaltung anfallende Chlorwasserstoff wird über Kopf der Kolonne abgezogen und passiert hierbei den Wasserauskreiser, während das HCl-freie Amin-Lösemittelgemisch aus dem Sumpf über einen Kühler entfernt und wieder in die Extraktion eingefahren wird. Ein Teilstrom wird durch Leiten über saures Aluminiumoxid (Aktivstufe 1; spezifische Oberfläche 200 $m^2/g$), mit dem eine Adsorptionssäule (Höhe 800 mm, ∅ 45 mm) beschickt ist, regeneriert. Die Anlage wird unter Stickstoff als Schutzgas betrieben.

Mit einer Mischung aus 1 155 g Tri-(2-ethylhexyl)-amin und 1 155 g Xylol (850 ml/h) wurden in 1 913 Stunden 505,4 kg 9,85 %ige kochsalzhaltige Salzsäure (250 ml/h) im Gegenstrom bei 50 °C extrahiert. Der Extrakt wurde in der Spaltkolonne bei 148 bis 152 °C der Hydrochloridspaltung unterworfen; er lieferte insgesamt 46,9 kg Chlorwasserstoff, der zu etwa einem Drittel als konz. Salzsäure neben Chlorwasserstoffgas anfiel. Da die Spaltung praktisch quantitativ verläuft, errechnet sich aus der angegebenen HCl-Menge eine Extraktionsrate von 94,2 %. Zur Regenerierung des Amins wurden ständig pro Stunde 100 ml des Sumpfproduktes über die mit Aluminiumoxid gefüllte Adsorptionssäule geleitet. Nach Beendigung des Versuches wurden von 1 155 g eingesetztem Tri-(2-ethylhexyl)-amin 1 036 g unverändert zurückgewonnen; das entspricht einem Verlust von 119 g oder 10,3 %, bezogen auf Einsatzamin. Aus der Regenerierung ließ sich noch Di-(2-ethylhexyl)-amin in einer Menge isolieren, die 40 g daraus herzustellendem tert. Amin entspricht. Stellt man dies in Rechnung, so reduziert sich der Aminverlust auf 6,8 %. Bezogen auf erzeugten Chlorwasserstoff errechnet sich ein Aminverlust von 0,17 %.

<u>Vergleichsbeispiel E</u>

In einer Apparatur gemäß Beispiel 1 wurden mit einer Mischung aus 1 150 g Tri-(2-ethylhexyl)-amin und 1 150 g Xylol in 1 175 Stunden 309,3 kg 10,6 %ige kochsalzhaltige Salzsäure im Gegenstrom extrahiert. Der Extrakt lieferte

nach Hydrochloridspaltung 32,0 kg Chlorwasserstoff; das entspricht einer Extraktionsrate von 97,6 %. Das im Sumpf der Spaltkolonne anfallende Amin wurde ohne vorherige Regenerierung in die Extraktion zurückgefahren. Nach Beendigung des Versuches wurden von 1 150 g eingesetztem Tri-(2-ethylhexyl)-amin 827 g unverändert zurückgewonnen; das entspricht einem Verlust von 323 g oder 28,1 %, bezogen auf Einsatzamin. Bei der Aufarbeitung ließ sich noch Di-(2-ethylhexyl)-amin und 2-Ethylhexylamin in einer Menge isolieren, die 186 g daraus herzustellendem tert. Amin entspricht. Stellt man dies in Rechnung, so reduziert sich der Aminverlust auf 11,9 %. Bezogen auf erzeugten Chlorwasserstoff errechnet sich ein Aminverlust von 0,43 %.

Beispiel 2

In der Apparatur gemäß Beispiel 1 wurden mit einer Mischung aus 1 750 g Trioctylamin und 7 000 g Dodecan in 1 087 Stunden 279,1 kg 9,74 %ige kochsalzhaltige Salzsäure im Gegenstrom bei 80 bis 90 °C extrahiert. Der Extrakt lieferte nach Hydrochloridspaltung bei 222 bis 224 °C 14,5 kg Chlorwasserstoff; das entspricht einer Extraktionsrate von 53,3 %. Das im Sumpf der Spaltkolonne anfallende Amin wurde vollständig regeneriert, indem es über eine mit saurem Aluminiumoxid (wie in Beispiel 1 beschrieben) beschickte groß dimensionierte Säule (Höhe 1 000 mm, ø 100 mm) geleitet wurde, bevor es wieder in die Extraktion gelangte. Nach Beendigung des Versuches wurden von 1 750 g eingesetztem Trioctylamin 1 438 g unverändert zurückgewonnen; das entspricht einem Verlust von 312 g oder 17,8 %, bezogen auf Einsatzamin. Aus der Regenerierung ließ sich Dioctylamin und Octylamin in einer Menge isolieren, die 183 g daraus herzustellendem tert. Amin entspricht. Berücksichtigt man diesen Wert, so reduziert sich der Aminverlust auf 7,4 %. Bezogen auf erzeugten Chlorwasserstoff errechnet sich ein Aminverlust von 0,89 %.

Vergleichsbeispiel F

In der Apparatur gemäß Beispiel 1, aber ohne Regenerierung, wurde mit einer Mischung aus 1 Gewichtsteil Trioctylamin und 4 Gewichtsteilen Dodecan eine ca. 10 %ige kochsalzhaltige Salzsäure im Gegenstrom bei 80 bis 90 °C extrahiert. Der Extrakt wurde bei 227 °C der Hydrochloridspaltung unterworfen. Der Versuch mußte nach kurzer Zeit aufgegeben werden, weil Leitungen und Extraktionssäule durch reichlich gebildetes Dioctylaminhydrochlorid verstopften.

Beispiel 3 und Vergleichsbeispiel G

In der Apparatur gemäß Beispiel 1 wurden mit einer Mischung aus 1 900 g Trioctylamin und 7 500 g Tetradecan in 481 Stunden 127,6 kg 10,95 %ige kochsalzhaltige Salzsäure im Gegenstrom bei 80 bis 90 °C extrahiert. Der Extrakt lieferte nach Hydrochloridspaltung bei 260 bis 262 °C 9,4 kg Chlorwasserstoff; das entspricht einer Extraktionsrate von 67,3 %. Das im Sumpf der Spaltkolonne anfallende Amin wurde vollständig regeneriert, indem es über eine mit saurem Aluminiumoxid beschickte, groß dimensionierte Säule (Höhe 1 000 mm, ∅ 100 mm) geleitet wurde, bevor es wieder in die Extraktion gelangte. Nach Beendigung des Versuches wurden von 1 900 g eingesetztem Trioctylamin 1 373,6 g unverändert zurückgewonnen; das entspricht einem Verlust von 526,4 g oder 27,7 %, bezogen auf Einsatzamin. Aus der Regenerierung ließ sich noch Dioctylamin und Octylamin in einer Menge isolieren, die 441,4 g daraus herzustellendem tert. Amin entspricht. Berücksichtigt man diesen Wert, so reduziert sich der Aminverlust auf 4,5 %. Bezogen auf erzeugten Chlorwasserstoff errechnet sich ein Aminverlust von 0,9 %.

Arbeitet man aber ohne Regenerierung (Vergleichsbeispiel G), so scheitert der Versuch aus den unter Vergleichsbeispiel F angegebenen Gründen.

Patentansprüche:

1. Verfahren zur Gewinnung von gasförmigem Chlorwasserstoff durch Extraktion von verdünnter wäßriger Salzsäure mit Aminen, indem man
   a) die wäßrige Salzsäure mit einem Amin oder einem Gemisch aus einem Amin und einem inerten, mit Wasser nicht mischbaren, mindestens bei 120 °C siedenden Lösemittel extrahiert, wobei tertiäre Alkylamine verwendet werden, die 14 bis 36 Kohlenstoffatome in den stickstoffgebundenen Seitenketten enthalten, davon höchstens eine stickstoffgebundene Methylgruppe und mindestens einen stickstoffgebundenen, mindestens 6 Kohlenstoffatome enthaltenden aliphatischen Rest, und bei denen die Säurekonstante $K_a$ des Amins kleiner als $10^{-3}$ ist,
   b) dem Extrakt ein inertes, mit Wasser nicht mischbares, mindestens bei 120 °C siedendes Lösemittel zugibt, sofern das Lösemittel nicht schon in Stufe a) zugegeben wurde,
   c) den Extrakt destilliert, die entstehenden Dämpfe kondensiert, aus dem zweiphasigen Kondensat kontinuierlich das Wasser abtrennt und die organische Phase in den Destillationsprozeß zurückgibt,
   d) den Extrakt nach Entfernung des Wassers am Rückfluß destilliert und den am Kopf der Kolonne freiwerdenden gasförmigen Chlorwasserstoff abzieht oder indem man den Chlorwasserstoff unterhalb des Siedepunktes des Lösemittels unter Durchleiten eines inerten Gasstromes abtrennt, und
   e) das das Amin enthaltende Lösemittel in den Extraktionsprozeß zurückführt,

dadurch gekennzeichnet,
daß man das Gemisch aus Amin, Lösemittel und gegebenenfalls Verunreinigungen vor dem Einsatz in die Stufe a) ganz oder teilweise über ein Adsorptionsmittel leitet.

2. Verfahren nach Anspruch 1, dadurch gekennzeichnet, daß man als inerte Lösemittel oberhalb 120 °C siedende, geradkettige oder verzweigte, aliphatische, cycloaliphatische, araliphatische oder aromatische, ganz oder weitgehend unpolare Kohlenwasserstoffe mit mindestens 6 bis 20 Kohlenstoffatomen verwendet.

3. Verfahren nach den Ansprüchen 1 und 2, dadurch gekennzeichnet, daß man als Adsorptionsmittel Aluminiumoxid mit einer spezifischen Oberfläche von 100 bis 400 $m^2/g$, Kieselgel mit einer spezifischen Oberfläche von 500 bis 700 $m^2/g$, silanisiertes Kieselgel mit einer spezifischen Oberfläche von 300 bis 400 $m^2/g$ oder Calciumzeolith mit einer spezifischen Oberfläche von 500 bis 600 $m^2/g$, jeweils gemessen nach BET, einsetzt.

4. Verfahren nach den Ansprüchen 1 bis 3, dadurch gekennzeichnet, daß man die Spaltung der Aminhydrochloride bei Sumpftemperaturen von 120 bis 300 °C durchführt.

0008611

Europäisches Patentamt

# EUROPÄISCHER RECHERCHENBERICHT

Nummer der Anmeldung

EP 79 101 875.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| E | EP - A2 - 0 003 472 (HÜLS A.G.)<br>-- | |
| A,D | DE - A1 - 2 633 640 (HÜLS A.G.)<br>& DE - B2 - 2 633 640<br>-- | |
| A | US - A - 3 975 387 (TEXACO)<br>-- | |
| A | US - A - 2 541 458 (UNION OIL)<br>-- | |
| A | DE - B - 1 232 971 (DU PONT)<br>-- | |
| A,P | DE - A1 - 2 816 305 (SVENSKA RAYON)<br>---- | |

KLASSIFIKATION DER ANMELDUNG (Int.Cl.3)

C 01 B 7/07

RECHERCHIERTE SACHGEBIETE (Int. Cl.3)

B 01 D 11/00
C 01 B 7/00
C 07 C 85/26

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-11-1979 | KESTEN |